# DEMANDE DE BREVET EUROPEEN

(11) **EP 0 532 812 A1**
(43) Date de publication de la demande: **24.03.1993**
(21) Numéro de dépôt: 91420315.3
(22) Date de dépôt: 09.09.1991
(51) Int. Cl.: B29C 59/02, B29C 59/04

(54) **Procédé d'obtention de traits ou de contours en creux sur une feuille ou pièce tubulaire en matière plastique ou métalloplastique et son utilisation dans la fabrication d'un tube souple**

(71) Demandeur: CEBAL S.A., F-92115 Clichy (FR)
(72) Inventeur: Benquet, Jacques, F-21240 Talant (FR); Schneider, Bernard, F-51800 Sainte-Menehould (FR)
(74) Mandataire: Séraphin, Léon

(57) **Abrégé**

L'invention a pour objet un procédé d'obtention de traits ou de contours en creux sur une feuille ou une pièce tubulaire (6) en matière plastique ou multicouche métalloplastique d'épaisseur inférieure à 1 mm, dans lequel on serre ladite feuille ou pièce (6) entre un outil (1) portant un ou des relief(s) de marquage (2, 3) et un moyen d'appui élastique (9) pour obtenir lesdits traits ou contours en creux, caractérisé en ce que ladite feuille ou pièce (6) est à moins de 50 ° C pendant ce serrage, et en ce que ledit moyen d'appui élastique (9) a une dureté Shore D comprise entre 70 et 120, lesdits traits ou contours en creux obtenus étant produits par déformation plastique avec retour élastique.

L'invention concerne aussi l'utilisation de ce procédé dans la fabrication de tubes ayant une tête moulée sur une jupe ainsi marquée. Elle s'applique en cosmétologie, pharmacie et pour les produits d'hygiène, alimentaire et d'entretien.

## Description

L'invention concerne un procédé de façonnage d'une feuille ou pièce tubulaire mince en matière plastique ou multicouche métalloplastique, spécialement dans le domaine de l'emballage. Par matière multicouche métalloplastique, on entend une matière dont les couches parallèles comprennent au moins une couche intérieure métallique, par exemple en aluminium, et deux couches superficielles en matière plastique.

Il est connu par US-A-4130263 de chauffer une feuille en matière plastique thermoformable, de préférence en PVC, en ABS ou en polyoléfine, à une température de thermoformage pouvant monter jusqu'à 350 ou 400 ° F = 176 à 204 ° C, et de la serrer entre un outil portant des reliefs de marquage et un moyen d'appui formant une enclume élastomérique relativement tendre, sa dureté A étant d'environ 35 à 60, pour obtenir sur cette feuille des motifs comportant des reliefs et des creux. Dans le cas d'une feuille en PVC, ladite température est d'au moins 280 ^{F} F 137°C, correspondant à un état plastique ou ramolli.

La demanderesse s'est demandé s'il était possible d'obtenir des gravures en creux bien contrôlées sur des pièces tubulaires en matière plastique, sans créer de distorsions, et, si possible en évitant les contraintes d'un chauffage.

### EXPOSE DE L'INVENTION

L'invention a pour objet un procédé d'obtention de traits ou de contours en creux sur une feuille ou une pièce tubulaire en matière plastique ou multicouche métalloplastique d'épaisseur inférieure à 1 mm et typiquement comprise entre 0,25 et 0,8 mm dans lequel on serre ladite feuille ou pièce entre un outil portant un ou des reliefs (6) de marquage et un moyen d'appui élastique pour obtenir lesdits traits ou contours en creux. Selon l'invention, ladite feuille ou pièce est à moins de 70 ° C et de préférence moins de 50 ° C pendant ce serrage, et ledit moyen d'appui élastique a une dureté Shore D comprise entre 70 et 120, et les traits ou contours en creux obtenus sont produits par déformation plastique avec retour élastique.

Les creux sont ici obtenus sans chauffage, ou par commodité sur produit tiède, ce qui est bien préférable qu'avec un chauffage pour une fabrication de série et pour améliorer la reproductibilité des résultats. Le marquage est obtenu en dépassant légèrement la limite élastique de la matière plastique serrée.

Le choix du moyen d'appui élastique est particulièrement important pour obtenir des marquages en creux contrôlés et reproductibles. Le moyen d'appui de l'invention est beaucoup plus dur que l'appui élastomérique relativement mou de US-A-4130623, dont la dureté A de 35 à 60 équivaut à une dureté Shore D comprise entre 7 et 16. Le rôle de ce moyen d'appui élastique est d'améliorer par compression la répartition des allongements lors des déformations de marquage en creux de la feuille ou pièce, et, de façon connexe, d'éviter des écrasements et amincissements locaux détériorant sa résistance mécanique et l'imperméabilité de la couche marquée. On obtient une déformation en creux sans distorsion inacceptable sur de la matière plastique non chauffée et donc assez rigide, alors que l'art antérieur pousse à utiliser un état chauffé beaucoup plus déformable ou même mou.

Lorsque la dureté du moyen d'appui élastique est inférieure à 70 Shore D, il se produit des ondulations marquées correspondant aux motifs en creux du marquage, l'allongement y étant excessif. On obtient un aspect de vagues, inacceptable pour des marquages à but d'identification ou de décoration, des distorsions géométriques prononcées n'étant pas acceptables.

Lorsque la dureté du moyen d'appui est trop forte, on constate des effets de fléchage ou de vrillage. En effet, il y a une forte compression dans le fond des creux, c est-à-dire entre l'extrémité des reliefs du marquage et le moyen d'appui trop dur, mais la pénétration de la feuille ou pièce marquée dans ce moyen d'appui est faible, de sorte que ses flancs latéraux ne sont pas soutenus. Avec un amincissement local important au fond des creux, on constate un fléchage de la feuille ou du tube correspondant à l'orientation principale des reliefs de marquage.

On préfère de façon générale avoir pour la feuille ou pièce au moins 15°C pendant son marquage par ledit serrage. Une température plus faible entraîne une diminution de ductilité pouvant affecter la déformabilité en creux de ladite feuille ou pièce.

Les polyoléfines se prêtent particulièrement bien à un tel marquage en creux. Avec le PE.BD, la dureté Shore D du moyen d'appui est de préférence comprise entre 85 et 110. Pour le PE.HD, la dureté Shore D du moyen d'appui est de préférence comprise entre 100 et 120.

Le moyen d'appui élastique est de préférence en une matière du groupe formé par : le PU (polyuréthane), le caoutchouc naturel ou/synthétique, les silicones, les silicones chargés.

Ce moyen d'appui a de préférence la forme d'un insert supporté et bordé par une pièce rigide, pa exemple en acier. L'insert doit alors de préférence être serré d'assez près vis-à-vis des déformations en creux qu'il doit contenir et régulariser, en pratique sa largeur est de 1 à 5 mm plus forte que la largeur utile du ou des reliefs de marquage.

Correspondant à un usage fréquent, on utilise de préférence avec un tel insert des reliefs de marquage de hauteur utile, ou hauteur d'enfoncement, comprise entre 0,2 et 0,6 mm, de façon à obtenir des traits ou contours en creux de 0,05 à 0,2 mm de profondeur.

Il est commode d'ajuster cette hauteur d'enfoncement ou "hauteur utile" des reliefs de marquage au moyen d'une surface de pied ou socle de ces reliefs qui vient s'appuyer sur la surface de la feuille ou pièce à marquer, que celle-ci soit en matière plastique ou métalloplastique.

Il est particulièrement intéressant de placer la portion d'une pièce tubulaire ainsi marquée entre des plis longitudinaux encadrant cette portion.

Pour cela, on marque préalablement ladite pièce tubulaire avec deux plis longitudinaux laminés devant encadrer lesdits traits ou contours en creux, ces plis présentant à leur sommet un creux extérieur de striction de profondeur comprise entre 2% et 15% de l'épaisseur de la pièce, et étant par suite articulée élastiquement.

Le procédé de marquage de l'invention est utilisé dans la fabrication de tubes souples, une pièce tubulaire constituant l'ébauche de la jupe souple du tube, et cette ébauche étant marquée en creux après avoir été éventuellement munie de plis longitudinaux, cela avant la fixation typiquement par moulage ou surmoulage de la tête en matière plastique du tube sur une extrémié de l'ébauche.

Le procédé s'applique alors à des ébauches tubulaires d'épaisseur comprise entre 0,2 et 0,6 mm, la couche superficielle à marquer ayant au moins 0,2mm d'épaisseur dans le cas d'une ébauche multicouche de façon à ne pas détériorer la couche barrière.

### AVANTAGES DE L'INVENTION

Elle permet de renouveler de façon simple à température ambiante et en tout cas inférieure à 70 ° C l'aspect et l'état de surface des pièces minces traitées, en particulier des jupes de tubes souples. Des décors de traits ou contours sont obtenus en creux sans faire appel à l'impression ; ils permettent aussi une préhension améliorée, le marquage se traduisant par des rugosités à sommet arrondi. La combinaison de traits ou contours en creux et de plis longitudinaux marqués par une fine striction extérieure donne des tubes de stabilité dimensionnelle améliorée, de géométrie parti- culère, certaines de leurs facettes portant en creux un décor ou un moyen de préhension. Enfin, le marquage en creux peut être fait sur une surface déjà décorée, sans qu'elle soit abîmée. En particulier, on peut obtenir avec une molette rotative un marquage complexe comprenant des courbes en creux se croisant. La non obligation de chauffer est un avantage considérable.

### EXEMPLES

La figure 1 représente un tube en cours de marquage, en coupe longitudinale.
La figure 2 représente le tube marqué criculai- rement obtenur, en vue de côté.
La figure 4 représente de même un autre tube, marqué longitudinalement, la figure 3 représentant sa disposition de marquage.
La figure 5 représente un troisième tube souple portant un marquage en creux sinueux, en vue de côté.
La figure 6 représente un quatrième tube marqué avec une molette étroite à pourtour cylindrique, en vue de côté.
La figure 7 représente la disposition de marquage des deuxième et troisième tube, en coupe longitudinale du tube en cours de marquage.
La figure 8 représente un cinquième tube portant des plis longitudinaux et des portions marquées en creux, en perspective cavalière.
La figure 9 représente un des plis précédents en section droite, en position dépliée.

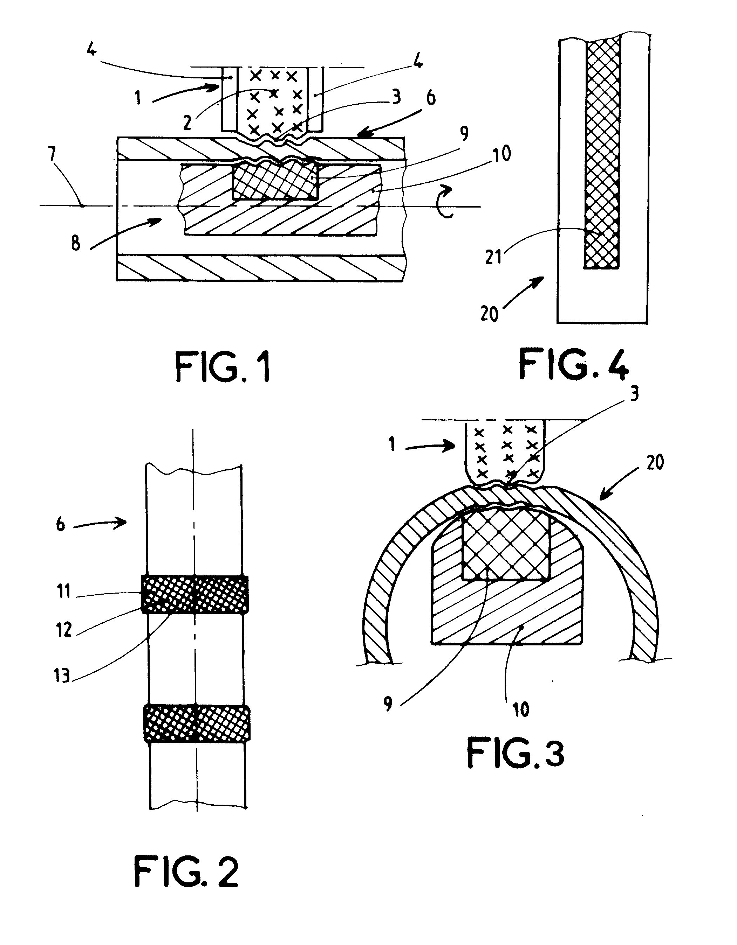

### Exemple 1 (figures 1 et 2) :

dans le cas de la figure 1, on utilise une molette rotative en acier portant des reliefs 2 croisés dits "pointes de diamant" 3, ces petites pointes pyramidales 3 ayant une hauteur de 0,4 mm. Cette molette 1 est bordée de deux surfaces de pied 4 cylindriques circulaires de même axe 5 que la molette 1, ces surfaces 4 s'appuyant sur le tube 6 pendant le marquage. Le tube 6 est en PE.HD de diamètre 40 mm et d'épaisseur 0,5 mm décoré préalablement en noir. Il est entraîné en rotation à température comprise entre 18 et 23 ° C autour de son axe 7, étant alors serré entre la molette 1 en rotation et un contre-appui fixe 8 constitué par un insert 9 encastré dans un support rigide 10 par rapport auquel il affleure ou dépasse de moins de 0,2 mm. Trois séries d'essais ont été effectuées en agissant sur la nature de l'insert 9.

On a testé d'abord un insert 9 hors invention en polyuréthane (PU) de dureté Shore D égale à 60. On a observé sur les tubes 6 marqués, la géométrie d'ensemble de leur marquage selon des zones transversales 11 de largeur individuelle 5 mm étant représentée sur la figure 2, des creux 12 entre les reliefs de type pyramidal 13 fortement marqués environ 0,2 mm et un gonflement au diamètre 41 mm des zones annulaires 11. L'examen en coupe montre que le marquage produit alors dans les creux 12 des amincissements locaux de la paroi du tube 6, avec des épaisseurs minimales de 0,35 à 0,4mm.

On a pris ensuite un insert 9 selon l'invention en PU de dureté Shore égale à 90, avec la même disposition de marquage. Les tubes 6 obtenus présentent des creux 12 bien réguliers et de seulement 0,1 mm, chaque zone annulaire 11 étant légèrement gonflée au diamètre 40,5 mm. En coupe, on voit que les déformations locales de la paroi des tubes sont régulières, l'épaisseur restant comprise entre 0,45 et 0,5 mm. Comme du reste dans le cas précédent, il n'y a pas eu de dégradation du décor noir.

Un troisième essai a été fait avec un insert 9 hors invention en acier. On a obtenu des tubes 6 marqués vrillés, et ayant des fonds des creux 12 amincis à 0,3 mm d'épaisseur locale. Le marquage d'une demi-circonférence du tube a conduit à un fléchage prononcé.

### Exemple 2 (figures 3 et 4)

Avec une molette de même géométrie que la précédente mais sans surface de pied ou d'appui, et de même à température ambiante, on a marqué en creux en "pointes de diamant" un tube 20 selon une zone longitudinale 21 de largeur 5 mm. Le tube 20, également en PE.HD de diamètre 40 x épaisseur 0,5 mm, était pour le marquage entraîné longitudinalement entre la molette 1 et l'insert 9 encastré dans un support fixe rigide 10, le serrage de la molette produisant comme avant une rentrée des "pointes de diamant" 3 dans le tube 20, ou hauteur utile de ces reliefs 3, de 0,4 mm. Avec les trois types d'insert 9 testés dans l'exemple 1, on a constaté des résultats semblables. L'insert 9 en PU de dureté Shore 90 donne une zone marquée à bords rectilignes sans aucun désaxage des tubes 20, avec une surface enveloppe en faible surépais- seur locale (0,2 mm).

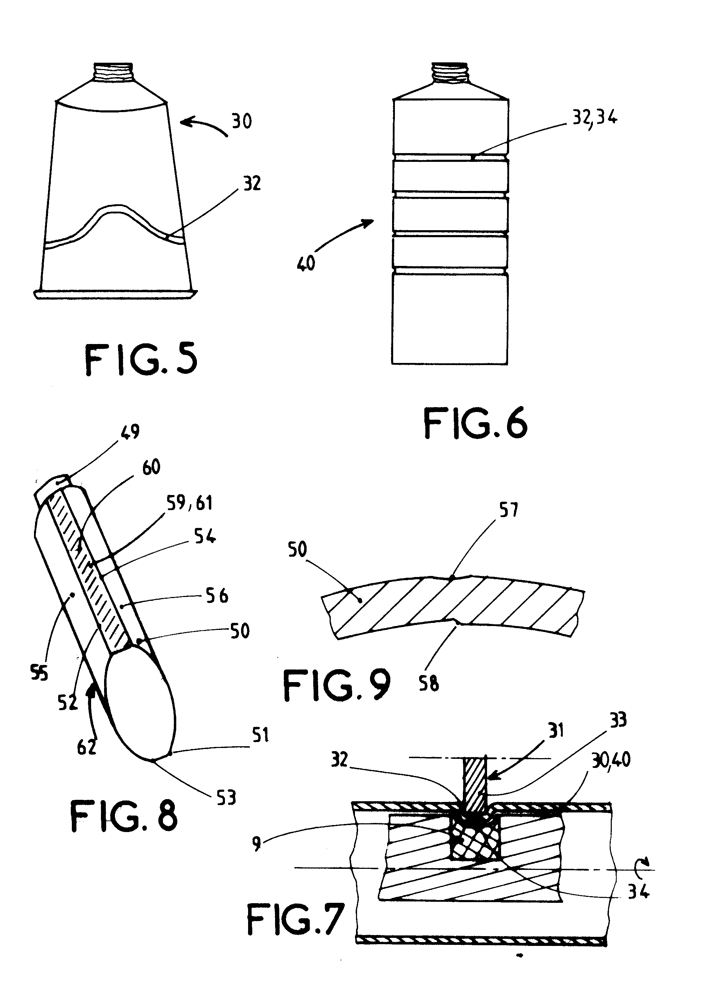

### Exemples 3 et 4 (figures 5 à 7) :

les figures 5 et 6 représentent des tubes 30 et 40, préalablement décorés en noir et initialement de diamètre 40 mm x épaisseur initiale 0,5 mm marqués en creux avec une molette métallique étroite 31 à pourtour cylindrique circulaire 33 de largeur 1,2 mm, avec en contre-appui un insert 9 en PV de dureté Shore D égale à 90 de 4 mm de largeur, qui est encastré et centré par rapport à l'extrémité d'appui ou pourtour 33 de la molette 31 (figure 7). Comme représenté sur cette figure 7, le tube 30 ou 40 à une température comprise entre 20 et 30 ° C est entraîné en rotation sur lui-même, tandis que sa paroi est serrée entre la molette 31 et l'insert 9, ce qui produit sur le tube 30 ou 40 une rainure en creux 32 de largeur 1 mm et de profondeur 0,15 mm au diamètre, rainure dont le fond 34 est écrasé et aminci à 0,45 mm d'épaisseur.

On remarque que ces rainures 32 des tubes 30 et 40 sont parfaitement régulières, et ne détériorent nullement la surface noire. Le tube 30 a été ensuite scellé à son extrémité inférieure, sa rainure sinueuse 32 a été obtenue en superposant pendant le marquage des déplacements en long du tube 30 et son entraînement en rotation. Le tube 40 porte quatre rainures 32 espacées entre elles de 10 mm, il n'a aucune flèche globale et les fonds des rainures 32 ont tous un diamètre légèrement en retrait de 39,85 mm.

Ces exemples 3 et 4 montrent la souplesse du procédé : emploi d'une molette produisant un trait ou contour en creux lisse, obtention de courbes en creux sinueuses, fidélité de la géométrie du creux obtenu avec les conditions de marquage choisies (géométrie et reliefs de la molette de marquage, insert, serrage).

### Exemple 5 (figures 8 et 9) :

la figure 8 représente un tube 62 à une jupe 50 décorée extérieurement en vert, d'épaisseur 0,5 mm en PE.HD, ses plis opposés 51 et 52 puis 53 et 54 ayant été obtenus par deux laminages successifs à la température ambiante, le 2 laminage serrant à plat l'ébauche décalée angulairement par rapport au premier laminage. L'écartement des galets était de 0,95 mm soit 1,9 fois l'épaisseur de l'ébauche, on a observé en pressant sur les grandes faces bombées 55 et 56 une fine ligne blanche en creux à l'endroit de chaque pli. L'examen en coupe d'une section droite de cette ébauche 50 dépliée montre que chaque ligne blanche est une surface extérieure de striction telle que 57 sur la figure 9, de profondeur comprise entre 0,025 et 0,03 mm. On remarque aussi une aspérité 58 à l'intérieur du pliage, produite par ce pliage avec compression. On a montré que des centaines de pliages d'un tel échantillon n'entraînaient pas de risques pour la pratique.

Après préparation des plis 51 à 54, on a fait passer également à la température ambiante chaque petite face telle que 59 large de 5 mm entre une molette rotative à reliefs obliques acérés au pas longitudinal de 1 mm et un insert encastré en PU de dureté Shore 90, les reliefs étant saillants de 0,3 mm et le serrage étant tel que la surface de base de la molette s'appuie sur la face 59. On a obtenu sur les faces 59 une alternance de reliefs affleurants 60 et de creux 61 de profondeur 0,07 mm, formant une plage moletée 59 qui améliore la préhension du tube et a une valeur décorative, tandis que les plis 51 à 54 améliorent la stabilité élastique du tube, c'est-à-dire son retour à sa forme initiale après pressage. Les plis 51 à 54 et le marquage en creux des petites faces 59 ont été faits sur l'ébauche de jupe 50 avant le moulage de la tête 49 produisant un tube souple 62.

### APPLICATIONS INDUSTRIELLES

Le procédé de marquage en creux de l'invention est utilisé en particulier dans la fabrication des tubes souples des industries de cosmétologie, pharmacie, hygiène, et des industries alimentaires et des produits d'entretien. Il permet à des aveugles d'identifier des tubes de produits.

## Revendications

1. Procédé d'obtention de traits ou de contours en creux (12, 13, 32, 61) sur une feuille ou une pèce tubulaire (6; 20; 30; 40; 50) en matière plastique ou multicouche métalloplastique d'épaisseur inférieure à 1 mm, dans lequel on serre ladite feuille ou pièce (6; 20; 30; 40; 50) entre un outil (1; 31) portant un ou des relief(s) de marquage (2; 3; 33) et un moyen d'appui élastique (9) pour obtenir lesdits traits ou ; contours en creux (12, 13, 32, 61), caractérisé en ce que ladite feuille ou pièce (6; 20; 30; 40; 50) est à moins de 50 ° C pendant ce serrage, et en ce que ledit moyen d'appui élastique (9) a une dureté Shore D comprise entre 70 et ; 120, lesdits traits ou contours en creux (12, 13, 32, 61) obtenus étant alors produits par déformation plastique avec retour élastique.

2. Procédé selon la revendication 1, dans lequel ladite feuille ou pièce (6; 20; 30; 40; 50) est au moins à 15°C pendant ledit serrage.

3. Procédé selon l'une quelconque des revendications 1 ou 2) dans lequel ladite matière plastique, ou la couche superficielle de ladite matière métalloplastique située du côté du ou des relief(s) de marquage (2, 3, 33), est une polyoléfine.

4. Procédé selon la revendication 3, dans lequel ladite polyoléfine est du PE.BD, la dureté Shore D dudit moyen d'appui (9) étant alors comprise entre 85 et 110.

5. Procédé selon la revendication 3, dans lequel ladite polyoléfine est du PE.HD, la dureté Shore D dudit moyen d'appui (9) étant alors comprise entre 100 et 120.

6. Procédé selon l'une quelconque des revendications 1 à 5, dans lequel ledit moyen d'appui élastique (9) est en une matière du groupe formé par le polyuréthane, le caoutchouc naturel ou synthétique, les silicones, les silicones ; chargés.

7. Procédé selon l'une quelconque des revendications 1 à 6, dans lequel ledit moyen d'appui élastique (9) a la forme d'un insert (9) supporté et bordé par une pèce rigide (10).

8. Procédé selon la revendication 7, dans lequel ledit insert (9) a une largeur de 1 à 5 mm plus forte que la largeur utile du ou desdits relief(s) de marquage (2, 3, 33).

9. Procédé selon la revendication 7, dans lequel on utilise des reliefs de marquage (2, 3, 33) de hauteur utile comprise entre 0,2 et 0,6 mm de façon à obtenir des traits ou contours en creux (12, 13, 32, 61) de 0,05 à 0,2mm de profondeur.

10. Procédé selon la revendication 9, dans lequel on ajuste ladite hauteur utile des reliefs de marquage (2, 3) au moyen d'une surface de pied (4) plus large qui vient s'appuyer sur la surface de ladite feuille ou pièce (6) en matière plastique ou métalloplastique.

11. Procédé selon l'une quelconque des revendications 1 à 10, dans lequel ledit outil (1, 31) portant le ou lesdits relief(s) de marquage (2, 3, 33) est rotatif.

12. Procédé selon l'une quelconque des revendications 1 à 11, dans le cas d'une pièce tubulaire (50), dans lequel on marque préalablement ladite pièce (50) avec deux plis longitudinaux laminés (51, 52) devant encadrer lesdits traits ou contours en creux (61), ces plis (51, 52) présentant à leur sommet un creux extérieur de striction (57) de profondeur comprise entre 2% et 1% de l'épaisseur de ladite pièce (50) et étant par suite articulés élastiquement.

13. Utilisation du procédé de l'une quelconque des revendications 1 à 12 dans la fabrication d'un tube souple, ladite pièce tubulaire (50) étant l'ébauche de la jupe (50) dudit tube (62), et ce tube (62) comprenant en outre une tête en matière plastique (49) fixée ensuite sur une extrémité de ladite ébauche de jupe marquée (50).

14. Utilisation du procédé de la revendication 13, ladite ébauche de jupe (50) étant en polyoléfine d'épaisseur comprise entre 0,2 et 0,6 mm ou étant multicouche, la couche superficielle à marquer ayant alors une épaisseur d'au moins 0,2 mm.
